# EUROPÄISCHE PATENTSCHRIFT

(11) **EP 3 152 995 B1**
(45) Veröffentlichungstag und Bekanntmachung des Hinweises auf die Patenterteilung: **22.08.2018**
(21) Anmeldenummer: 16401062.1
(22) Anmeldetag: 12.09.2016
(51) Int. Cl.: A01C 17/00

(54) **VERFAHREN ZUR ABWURFWINKELREGELUNG EINES SCHLEUDERSTREUERS**
METHOD FOR CONTROLLING THE DISCHARGE ANGLE OF A CENTRIFUGAL SPREADER
PROCÉDÉ DE RÉGULATION D'ANGLE DE DÉVERSEMENT D'UN ÉPANDEUR D'ENGRAIS

(30) Priorität: 06.10.2015 DE 102015116948
(43) Veröffentlichungstag der Anmeldung: 12.04.2017
(73) Patentinhaber: Amazonen-Werke H. Dreyer GmbH & Co. KG, 49205 Hasbergen (DE)
(72) Erfinder: Rahe, Florian, 49504 Lotte (DE); Wessels, Thomas, 49080 Osnabrück (DE)

(56) Entgegenhaltungen:
- EP-A2- 2 777 376
- DE-A1- 19 723 359
- DE-A1-102014 102 645

## Beschreibung

Die Erfindung betrifft ein Verfahren zur Abwurfwinkelregelung sowie einen entsprechend ausgebildeten Schleuderstreuer.

Wie die DE 197 23 359 A1 offenbart, eigenen sich für den Austrag von Dünger auf landwirtschaftlichen Anbauflächen Schleuderstreuer, insbesondere solche mit zwei nebeneinander angeordneten und gegenläufig angetriebenen Streuscheiben. Hierbei wird der Dünger in Abhängigkeit vom Streuscheibentyp und der Düngersorte in Form eines charakteristischen Streufächers oder Streubilds durch Anschlussfahren über eine vorgegebene Arbeitsbreite verteilt.
Als Parameter zur Charakterisierung von Streubildern einer Streuscheibe eignen sich insbesondere die mittlere Wurfweite WW und der mittlere Abwurfwinkel AWW des Düngeraustrags. Diese Werte werden für verschiedene Arbeitsbreiten AB und für unterschiedliche Düngersorten in Streutabellen bereitgestellt und können für eine gewünschte Arbeitsbreite an einer Bedienstation zu Beginn des Arbeitsbetriebs eingegeben werden. Die mittleren Abwurfwinkel AWW und Wurfweiten WW werden beispielsweise als 50%-Perzentil einer in Umfangsrichtung zum Streuscheibenmittelpunkt gemessenen Abwurfwinkelverteilung beziehungsweise einer radial von der Streuscheibe aus definierten Wurfweiteverteilung des Streubilds ermittelt. Weitere gebräuchliche Parameter sind der Anfangswert AWWa der Abwurfwinkelverteilung als 5%-Perzentil und der zugehörige Endwert AWWe als 95%-Perzentil, ebenso ein Anfangswert WWa der Wurfweiteverteilung als 5%-Perzentil und ein Endwert WWe als 95%-Perzentil. Außerdem sind Zusammenhänge zwischen der Arbeitsbreite AB, der mittleren Wurfweite WW und des mittleren Abwurfwinkels AWW bekannt, so dass sich beispielsweise letzterer aus der Arbeitsbreite AB und der mittleren Wurfweite WW berechnen lässt.
Diese charakteristischen Parameter von Streubildern werden beispielsweise unter reproduzierbaren Bedingungen durch Schalenversuche in Streuhallen für einzelne Düngersorten in Abhängigkeit vom Streuscheibentyp, der Drehzahl und unterschiedlichen Stellungen eines an der Streuscheibe ausgebildeten Einleitsystems für Dünger ermittelt. Die für bestimmte Arbeitsbreiten und Düngersorten unter Standardbedingungen einzustellenden Stellungen und Drehzahlen werden dann üblicherweise in Streutabellen aufgelistet.

Nachteilig ist jedoch, dass sich insbesondere die Oberflächeneigenschaften von Dünger in Abhängigkeit von Lagerbedingungen, wie beispielsweise der Luftfeuchte oder dergleichen, ändern. Insbesondere das Reibverhalten der Düngerkörner wirkt sich entscheidend auf die Abwurfwinkelverteilung aus. Ebenso können sich einzelne Düngerchargen unterscheiden, beispielsweise hinsichtlich der Korngröße, die direkten Einfluss auf die erzielte Wurfweiteverteilung hat. Daher kann die Anwendung der unter standardisierten Bedingungen ermittelten Streuparameter im konkreten Anwendungsfall zu unbefriedigenden Ergebnissen führen.
Es wurden daher bereits Anstrengungen unternommen, Streufächer bzw. Ist-Streubilder beim Düngeraustrag zu kontrollieren und gegebenenfalls an ein Soll-Streubild anzugleichen. Hierzu ist es beispielsweise aus der EP 2 783 560 A2 bekannt, an jeder Streuscheibe über deren nutzbaren Abwurfwinkelbereich Radarsensoren zu verteilen, die Radarkeulen aussenden und im nutzbaren Abwurfwinkelbereich Information über eine Ist-Abwurfwinkelverteilung liefern. Aus dieser lässt sich dann beispielsweise der mittlere Abwurfwinkel AWW ableiten. Somit liegt im Arbeitsbetrieb laufend Information über Ist-Abwurfwinkel vor, die zur Steuerung der den Streuscheiben zugeordneten Einleitsysteme für Dünger und/oder zur Drehzahlanpassung der Streuscheiben verwendet werden kann. Ein weiteres Verfahren zur Regelung des Streufächers eines Scheibenstreuers ist offenbart in EP 2 777 376 A2.

Trotz dieser Verbesserungen sind weiterhin Messungen von Streubildern in Schalenversuchen vor Ort zur Vorbereitung des Düngeraustrags erforderlich, ebenso Bedienereingriffe im Arbeitsbetrieb auf der Grundlage der Streutabellen. Ansonsten würde im Arbeitsbetrieb beispielsweise die Information zu der mit einer vorliegenden Düngercharge tatsächlich erzielten Wurfweite fehlen, die wiederum als Leitparameter zum Einstellen der gewünschten Arbeitsbreite dient.
Es besteht daher Bedarf, die Überwachung des Düngeraustrags mittels an dem Schleuderstreuer mitgeführter Sensoren so weiterzubilden, dass der Einsatz von Streutabellen und Schalenversuchen vor Ort reduziert werden kann oder sogar entbehrlich wird.
Die gestellte Aufgabe wird mit einem Verfahren zur Abwurfwinkelregelung gemäß Anspruch 1 gelöst. Demnach wird das Verfahren in einem Schleuderstreuer mit insbesondere zwei Streuscheiben durchgeführt und umfasst einen Schritt a), in dem ein Soll-Abwurfwinkel aus einer vorgegebenen Arbeitsbreite und einer beim Austrag von Dünger hinter einer Streuscheibe des Schleuderstreuers gemessenen Ist-Wurfweite berechnet wird. In einem Schritt b) wird ferner ein Ist-Abwurfwinkel beim Austrag des Düngers gemessen und eine Regelgröße der Abwurfwinkelregelung aus dem Soll-Abwurfwinkel und dem Ist-Abwurfwinkel berechnet. Schließlich wirkt eine Stellgröße der Abwurfwinkelregelung in einem Schritt c) auf die Stellung, insbesondere auf einen Positionswinkel, eines an der Streuscheibe ausgebildeten Einleitsystems für den Dünger ein, beispielsweise durch Angleichen der Stellung des Einleitsystems an einen zugehörigen Sollwert.

Durch Kombination einer Überwachung des Abwurfwinkels und der Wurfweite während des Düngeraustrags lässt sich die Abwurfwinkelverteilung des Streubilds fortlaufend an eine vorgegebene Arbeitsbreite und die eingesetzte Düngersorte anpassen, ohne dafür auf Streutabellen zurückgreifen zu müssen. Hierbei wird beispielsweise die Drehzahl der Streuscheiben konstant gehalten. In diesem Fall wird lediglich die Stellung des Einleitsystems bezüglich der zugeordneten Streuscheibe als Regelgröße in Abhängigkeit von den gemessenen Ist-Abwurfwinkeln und Ist-Wurfweiten angepasst.

Unter dem Begriff Abwurfwinkelregelung ist zu verstehen, dass die Regelgröße in einem elektronischen Regler unter Berücksichtigung eines vorgegebenen Regelstreckenverhaltens verarbeitet wird und daraus eine Stellgröße der Abwurfwinkelregelung zur Ansteuerung eines Stellglieds im Einleitsystem oder Streuscheibenantrieb berechnet und ausgegeben wird.

Vorzugsweise wird die Regelgröße der Abwurfwinkelregelung einschließlich einer Differenzbildung aus dem Soll-Abwurfwinkel und dem Ist-Abwurfwinkel berechnet. Dies ermöglicht eine einfache und schnelle Verarbeitung des gemessenen Ist-Abwurfwinkels.

Vorzugsweise wird der Ist-Abwurfwinkel mittels Radarstrahlen vom Schleuderstreuer aus und insbesondere fortlaufend gemessen. Radarmessung ermöglicht eine zuverlässige und gegen Störeinflüsse unempfindliche Messung bewegter Objekte, wie beispielsweise der ausgetragenen Düngerkörner. Unter einer fortlaufenden Messung ist zu verstehen, dass die Messung des Ist-Abwurfwinkels und der Ist-Wurfweite in geeigneten Zeitabständen während des Düngeraustrags wiederholt wird.

Vorzugsweise ist der Ist-Abwurfwinkel ein charakteristischer, insbesondere mittlerer Abwurfwinkel einer mittels Radarstrahlen gemessenen Abwurfwinkelverteilung. Der mittlere Abwurfwinkel ermöglicht eine schnelle und auf bekannten Parametern von Streubildern beruhende Berechnung der Richtung des Düngeraustrags. Eine gemessene Abwurfwinkelverteilung bietet die Grundlage für unterschiedliche Algorithmen zur Beurteilung der Abwurfrichtung und eine zuverlässige Bestimmung des mittleren Abwurfwinkels.

Vorzugsweise wird die Drehzahl der Streuscheibe angepasst, um den Soll-Abwurfwinkel innerhalb eines festgelegten Sollwertbereichs von beispielsweise +/- 5° um einen gewünschten Abwurfwinkel zu halten, beispielsweise zwischen 15 und 25°. Darunter ist zu verstehen, dass die Drehzahl zunächst konstant gehalten wird, solange der Soll-Abwurfwinkel allein durch Verstellen des Einleitsystems im Sollwertbereich gehalten werden kann. Für den Fall, dass der Soll-Abwurfwinkel den Sollwertbereich zu verlassen droht, wird zusätzlich die Drehzahl der betroffenen Streuscheibe angepasst, so dass der Soll-Wurfwinkel innerhalb des Sollwertbereichs bleibt. Die Drehzahl der Streuscheibe wird dabei derart angepasst, dass mittels der anschließenden Anpassung der Stellung des Einleitsystems der gewünschte Ist-Abwurfwinkel erreicht werden kann. Eine geeignete Drehzahl ist somit die Voraussetzung dafür, dass der Ist-Abwurfwinkel in ausreichendem Maße an den Soll-Abwurfwinkel angeglichen werden kann.

Dadurch lassen sich zu kleine Ist-Abwurfwinkel vermeiden, bei denen der Dünger zu weit nach innen geworfen und beispielsweise aufgrund eines teilweisen Auftreffens auf Bauteile des Schleuderstreuers zu einem unerwünscht verformten und somit fehlerhaften Streubild führen würden. Ebenso lassen sich zu große Ist-Abwurfwinkel vermeiden, bei denen der Dünger zu weit nach außen geworfen wird und das Streubild eines Zweischeibenstreuers in unerwünschtem Maße trapezförmig wird. Somit lassen sich Streufehler aufgrund einer mangelnden Stabilität des Streubilds bei schwankenden Arbeitsbedingungen vermeiden. Bezogen auf eine vorgegebene Arbeitsbreite würden zu kleine Abwurfwinkel zu einer zu großen Wurfweite und zu große Abwurfwinkel zu einer zu kleinen Wurfweite führen.

Alternativ wird die Drehzahl der Streuscheibe angepasst, um ein vorgegebenes Verhältnis aus einer zuvor festgelegten Arbeitsbreite und der Ist-Wurfweite einzuhalten oder dieses Verhältnis in einem festgelegten Sollwertbereich zu halten. Da sich bestimmte Verhältnisse von Arbeitsbreite und Wurfweite zur Einstellung von stabilen Streubildern als äußerst vorteilhaft erwiesen haben, kann es sinnvoll sein, dies als Kriterium zur Einstellung der Drehzahl der Streuscheibe heranzuziehen.

Vorzugsweise wird eine Warnmeldung ausgegeben, falls der Ist-Abwurfwinkel außerhalb des Sollwertbereichs liegt. Warnmeldungen sind insbesondere bei einem mechanischen Antrieb des Schleuderstreuers mittels einer Zapfwelle oder dergleichen vorteilhaft, da sich die Drehzahl dann in der Regel nicht vom Schleuderstreuer aus ändern lässt sondern nur durch einen Bedienereingriff am Schlepper. Beispielsweise wird dazu eine nötige Drehzahlanpassung am Schlepper angezeigt und vom Bediener bestätigt bzw. editiert.

Bei einem mechanischen Antrieb der Streuscheibe ist es besonders vorteilhaft, die Drehzahl durch Übermittlung eines Steuersignals vom Schleuderstreuer an einen damit gekoppelten und die Streuscheibe antreibenden Schlepper anzupassen. Beispielsweise kann der Schleuderstreuer dem Schlepper über einen Isobus oder dergleichen Informationen und Kommandos übermitteln, um eine erforderliche Drehzahl der Zapfwelle einzustellen und dadurch die Drehzahl der Streuscheiben anzupassen. Derartige Anpassungen können dann auch automatisch ohne Eingriff des Bedieners erfolgen.

Vorzugsweise dient das Verfahren ferner zur Wurfweiteregelung des Schleuderstreuers und umfasst hierzu folgende Schritte: d) Berechnung einer Soll-Wurfweite aus der Arbeitsbreite und einem vorgegebenen Soll-Abwurfwinkel oder Berechnung einer Sollwurfweite aus der Arbeitsbreite und einem vorgegebenen Verhältnis von Sollwurfweite und Arbeitsbreite; und e) Messen einer Ist-Wurfweite beim Austrag des Düngers und Berechnen einer Regelgröße der Wurfweiteregelung aus der Soll-Wurfweite und der Ist-Wurfweite. Ferner wirkt dann eine Stellgröße der Wurfweiteregelung in einem Schritt f) auf die Drehzahl der Streuscheibe ein.

Eine Einbeziehung der Drehzahlsteuerung ist insbesondere bei hydraulischem Antrieb der Streuscheibe vorteilhaft und ermöglicht eine parallele Regelung des Abwurfwinkels und der Wurfweite, um einen vorgegebenen Soll-Abwurfwinkel auf der Grundlage einer vorgegebenen Arbeitsbreite ohne Eingriff eines Bedieners einzuhalten.

Da sich für eine bestimmte Arbeitsbreite und Düngersorte aus Masterversuchen unter reproduzierbaren Bedingungen, wie beispielsweise in einer Streuhalle oder dergleichen, ermitteln lässt, mit welchem Abwurfwinkel eine besonders gleichmäßige Verteilung des Düngers im Streubild erzielt werden kann, ist eine Regelung im Arbeitsbetrieb unter Vorgabe eines dementsprechenden Soll-Abwurfwinkels vorteilhaft. Somit ist eine Regelung, die den Ist-Abwurfwinkel an einen Soll-Abwurfwinkel angleicht, hinsichtlich der Verteilungsqualität einer Regelung vorzuziehen, bei der der Ist-Abwurfwinkel lediglich innerhalb eines vorgegebenen Sollbereichs gehalten wird.

Vorzugsweise wird die Regelgröße der Wurfweiteregelung einschließlich einer Differenzbildung aus der Soll-Wurfweite und der gemessenen Ist-Wurfweite berechnet. Dies ermöglicht eine schnelle Berechnung der Regelgröße auf der Grundlage von Standardparametern, wie sie beispielsweise in Streutabellen gebräuchlich sind.

Vorzugsweise wird die Ist-Wurfweite mittels Radarstrahlen vom Schleuderstreuer aus und insbesondere fortlaufend gemessen. Mittels Radarstrahlen lassen sich die beim Düngeraustrag üblichen Wurfweiten zuverlässig und mit geringer Störanfälligkeit überwachen.

Der vorgegebene Soll-Abwurfwinkel ist für jeden Streuertyp individuell und beträgt beispielsweise 18° bis 20°, insbesondere 18,5° bis 19,5°. Diese Werte ermöglichen bei den üblichen Arbeitsbreiten besonders stabile und gleichmäßige Streubilder. Geringe Schwankungen im Streubild kommen beispielsweise durch einen kleinen Verteilungskoeffizienten zum Ausdruck, der in den obigen Bereichen des Soll-Abwurfwinkels kleiner als 10% ist. Der vorgegebene Soll-Abwurfwinkel der Wurfweiteregelung ist ein bedienerseitig festgelegter Parameter, der Soll-Abwurfwinkel der Abwurfwinkelregelung dagegen ein in Abhängigkeit von der gemessenen Ist-Wurfweite berechneter Parameter.

Vorzugsweise ist die Streuscheibe hydraulisch angetrieben. Die für die Abwurfwinkelregelung und Wurfweiteregelung grundlegenden Parameter, insbesondere der Ist-Abwurfwinkel und die Ist-Wurfweite, lassen sich bei einem hydraulischen Antrieb ohne nennenswerte Einschränkungen im Rahmen der geforderten Regelcharakteristika anpassen. Insbesondere ermöglicht ein hydraulischer Antrieb eine Regelung ohne Bedienereingriff.

Vorzugsweise geht die Drehzahl der Streuscheibe als Störgröße in die Berechnung der Regelgröße der Abwurfwinkelregelung ein. Insbesondere dient die Drehzahl dann zur kompensatorischen Störgrößenaufschaltung in der Abwurfwinkelregelung. Dadurch kann die Regelung schneller auf Abweichungen der gemessenen Istwerte von den jeweiligen Sollwerten reagieren.

Die gestellte Aufgabe wird ferner mit einem Schleuderstreuer, insbesondere Zweischeibenstreuer, nach Anspruch 17 gelöst. Demnach umfasst dieser wenigstens eine Streuscheibe und ein zugehöriges Einleitsystem für Dünger sowie eine erste, insbesondere radargestützte Überwachungseinrichtung zum Messen eines Abwurfwinkels des von der Streuscheibe ausgetragenen Düngers. Erfindungsgemäß ist ferner eine zweite, insbesondere radargestützte Überwachungseinrichtung zum Messen einer Wurfweite des von der Streuscheibe ausgetragenen Düngers vorhanden sowie ein Regelungssystem zur Abwurfwinkelregelung gemäß der oben beschriebenen Aspekte des Verfahren oder zur gemeinsamen Abwurfwinkelregelung und Wurfweiteregelung gemäß weiterer oben beschriebener Aspekte des Verfahrens.

Bevorzugte Ausführungsformen der Erfindung sind in den Zeichnungen dargestellt. Es zeigen:
- Fig. 1: eine schematische Draufsicht auf einen Schleuderstreuer mit einem von diesem erzeugten Streubild und charakteristischen Parametern;
- Fig. 2: eine bevorzugte Ausführungsform des Verfahrens für einen mechanischen Antrieb des Schleuderstreuers; und
- Fig. 3: eine bevorzugte Ausführungsform des Verfahrens für einen hydraulischen Antrieb des Schleuderstreuers.

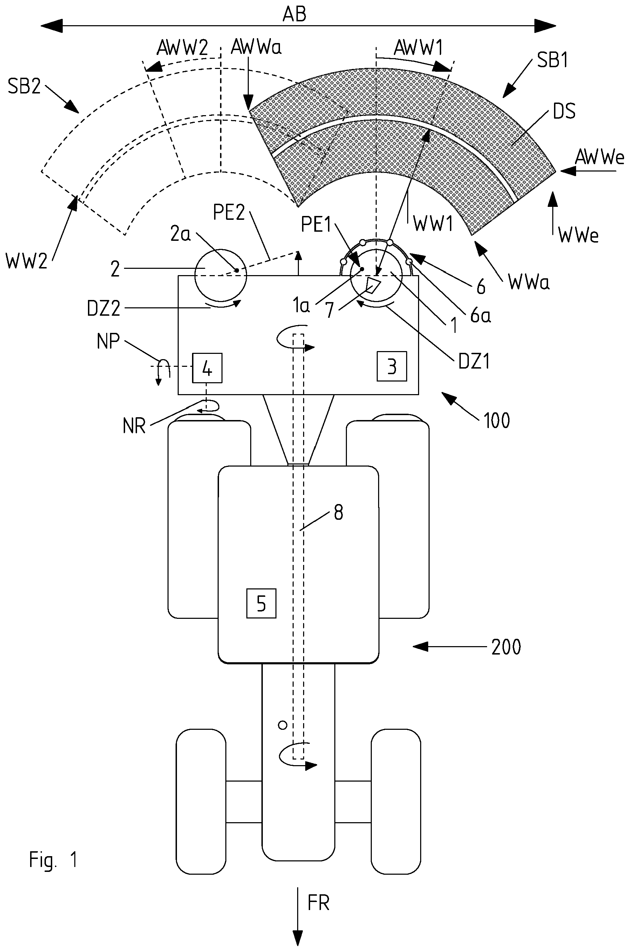

Wie die Fig. 1 erkennen lässt, umfasst der Schleuderstreuer 100 in einer bevorzugten Ausführungsform eine erste Streuscheibe 1 mit einem zugehörigen Einleitsystem 1a für Dünger sowie eine zweite Streuscheibe 2 mit einem zugehörigen Einleitsystem 2a. Die Einleitsysteme 1a, 2a umfassen herkömmliche Dosierungseinrichtungen, wobei wenigstens die Stellungen PE1, PE2 ihrer Aufgabepunkte bezüglich der Streuscheiben 1, 2 maschinell eingestellt werden können. Die Stellungen PE1, PE2 sind beispielsweise als Positionswinkel bezüglich einer beliebigen Hilfslinie in Drehrichtung der jeweiligen Streuscheibe 1, 2 definiert, gegebenenfalls ferner als radialer Abstand von der Drehachse der jeweiligen Streuscheibe 1, 2.

In der Fig. 1 sind die Einleitsysteme 1a, 2a schematisch anhand ihrer Aufgabepunkte für Dünger dargestellt. Aus Gründen der Übersichtlichkeit ist lediglich die Stellung PE2 des zweiten Einleitsystems 2a beispielhaft durch dessen Positionswinkel angedeutet. Für das Einleitsystem 1a gilt der gleiche Zusammenhang bezogen auf die Drehrichtung der ersten Streuscheibe 1.

Der Schleuderstreuer 100 umfasst ferner eine Steuereinheit 3 zur Steuerung der Streuscheiben 1, 2 und ihrer Einleitsysteme 1a, 2a. Die Steuereinheit 3 ermöglicht wenigstens eine Anpassung der Stellungen PE1, PE2 und insbesondere bei hydraulischem Antrieb der Streuscheiben 1, 2 auch eine Anpassung ihrer Drehzahlen DZ1, DZ2. Bei mechanischem Antrieb der Streuscheiben 1, 2 werden die Drehzahlen DZ1, DZ2 beispielsweise von einem Schlepper 200 aus eingestellt.

Schematisch dargestellt ist ferner eine optionale Neigungsmesseinrichtung 4 zum Messen einer ersten Hangneigung NP in Fahrtrichtung FR und einer zweiten Hangneigung NR orthogonal zur Fahrtrichtung FR.

Die Steuereinheit 3 bildet mit einer Bedienstation 5, die lediglich beispielhaft im Bereich eines mit dem Schleuderstreuer 100 verbundenen Schleppers 200 dargestellt ist, ein Steuerungssystem für den Schleuderstreuer 100. Die Bedienstation 5 kann auch am Schleuderstreuer 100 angeordnet sein. Die Bedienstation 5 dient zur Anzeige von Maschinenparametern des Schleuderstreuers 100 und zur Eingabe wenigstens einer verwendeten Düngersorte DS und einer vorzugebenden Arbeitsbreite AB für den Düngeraustrag.

Im nutzbaren Abwurfwinkelbereich der ersten Streuscheibe 1 ist eine Überwachungseinrichtung 6 zum Messen einer Abwurfwinkelverteilung im Wesentlichen quer zur Fahrtrichtung FR ausgebildet. Die Überwachungseinrichtung 6 umfasst mehrere ringförmig um die Streuscheibe 1 angeordnete Radarsensoren 6a. Diese senden beispielsweise Radarkeulen aus und detektieren die von den Düngerteilchen reflektierten Radarwellen auf bekannte Weise, um daraus einen Istwert des Abwurfwinkels AWW1 zu berechnen. Es wären hierzu prinzipiell auch andere Verfahren denkbar, die die weggeschleuderten Düngerteilchen beispielsweise optisch oder elektromechanisch überwachen.

Zusätzlich ist im Bereich der ersten Streuscheibe 1 eine Überwachungseinrichtung 7 zum Messen einer Wurfweiteverteilung des Düngeraustrags schematisch angedeutet. Auch die Überwachungseinrichtung 7 sendet wenigstens eine Radarkeule aus und detektiert die von den Düngerteilchen reflektierten Radarwellen auf bekannte Weise, um daraus einen Istwert der Wurfweite WW1 zu berechnen. Auch an dieser Stelle wären andere Verfahren denkbar, die die weggeschleuderten Düngerteilchen beispielsweise optisch oder elektromechanisch überwachen.

Die Streuscheiben 1, 2 werden vom Schlepper 200 mittels einer Antriebskopplung 8 gegenläufig mit vorzugsweise identischen Drehzahlen DZ1, DZ2 gedreht. Die Antriebskopplung 8 kann hydraulisch sein oder mechanisch mittels einer angedeuteter Zapfwelle oder dergleichen.

Die Streuscheiben 1, 2 sind bezüglich der Fahrtrichtung FR achsensymmetrisch angeordnet und erzeugen auf einer horizontalen Referenzebene vorzugsweise entsprechend symmetrische Streubilder SB1, SB2. Dies ist in der Fig. 1 lediglich zur Verdeutlichung der charakteristischen Parameter schematisch angedeutet. Jedoch können die Streubilder SB1, SB2 je nach Vorgabe und/oder vorgefundener Topographie auch asymmetrisch ausgebildet sein. Für entsprechende Anpassungen der Istwerte der Abwurfwinkel AWW1, AWW2 an ihre Sollwerte sind die Einleitsysteme 1a, 2a daher unabhängig voneinander einstellbar.

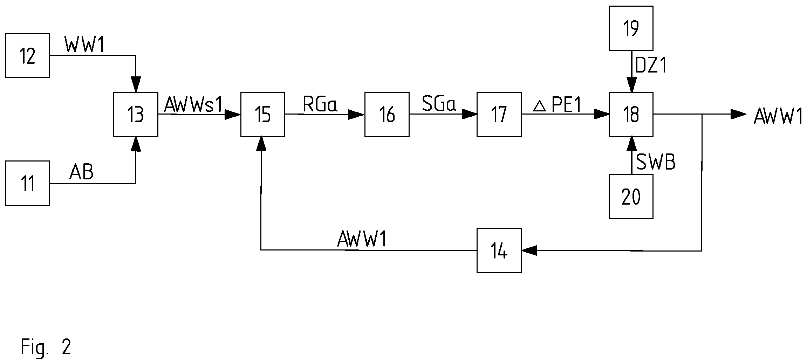

Wie die Fig. 2 hinsichtlich des Verfahrens erkennen lässt, erfolgt die Abwurfwinkelregelung bei einem mechanischem Antrieb des Schleuderstreuers 100 auf der Grundlage eines vom Schleuderstreuer 100 ausgemessenen Istwerts der Wurfweite WW1 und einer bedienerseitig vorgegebenen Arbeitsbreite AB, wobei die Drehzahl DZ1 der Streuscheibe 1 nur unter speziellen, nachfolgend noch näher beschriebenen Umständen als veränderlicher Parameter in die Abwurfwinkelregelung eingeht.

Nachfolgend wird stellvertretend nur die Regelung an der ersten Streuscheibe 1 beschrieben. Die zweite Streuscheibe 2 kann auf gleiche Weise auf der Grundlage der an der ersten Streuscheibe 1 gewonnen Messdaten und Berechnungsergebnisse geregelt werden, oder auf entsprechende Weise mittels zusätzlicher Überwachungseinrichtungen an der zweiten Streuscheibe 2.

Im Einzelnen basiert die Abwurfwinkelregelung gemäß Fig. 2 auf einer bedienerseitigen Vorgabe der gewünschten Arbeitsbreite AB in einem Schritt 11. In einem Schritt 12 wird ferner der Istwert der Wurfweite WW1 des Düngeraustrags während des Arbeitsbetriebs fortlaufend mit der Überwachungseinrichtung 7 gemessen und gemeinsam mit der vorgegebenen Arbeitsbreite AB als Grundlage für eine fortlaufend durchgeführte Berechnung eines Soll-Abwurfwinkels AWWs1 in einem Schritt 13 verwendet.

In einem Schritt 14 wird ferner fortlaufend der Ist-Abwurfwinkel AWW1 des Düngeraustrags mit der Überwachungseinrichtung 6 gemessen.

In einem Schritt 15 wird aus dem berechneten Soll-Abwurfwinkel AAWs1 und dem gemessenen Ist-Abwurfwinkel AWW1 eine Regelgröße RGa für die Abwurfwinkelregelung berechnet, beispielsweise durch Differenzbildung.

In einem Schritt 16 ermittelt ein Regler unter Berücksichtigung eines bekannten Regelstreckenverhaltens 17 des Einleitsystems 1a eine Stellgröße SGa der Abwurfwinkelregelung für das Einleitsystem 1a der ersten Streuscheibe 1, beispielsweise in Form einer Änderung ΔPE1 für die Stellung PE1.

In einem Schritt 18 wird vorab berechnet, ob die Stellgröße SGa der Abwurfwinkelregelung an dem Einleitsystem 1a einen Abwurfwinkel AWW1 erzeugt, der innerhalb eines vorgegebenen Sollwertbereichs SWB liegt, beispielsweise innerhalb eines Bereichs von 15° bis 25°. Dieser wird beispielsweise in einem Schritt 20 vorgegeben.

Falls dies allein durch Verstellen des Einleitsystems 1a nicht erreichbar ist, werden eine Warnmeldung und/oder ein Eingabevorschlag für den Bediener ausgegeben, um zusätzlich die Drehzahl DZ1 der Streuscheibe 1 so zu korrigieren, dass der vorgegebene Sollwertbereich SWB für den Abwurfwinkel AWW1 eingehalten wird. Dies erfolgt unter Berücksichtigung des Regelstreckenverhaltens der Antriebskopplung 8, so dass nach entsprechendem Verstellen des Einleitsystems 1a und der Drehzahl DZ1 ein neuer Istwert des Abwurfwinkels AWW1 resultiert, der wiederum im Schritt 14 kontrolliert wird.

Der Sollwertbereich SWB wird somit im Wesentlichen zuerst durch Anpassen der Drehzahl DZ1 eingestellt und auf dieser Grundlage danach der Istwert des Abwurfwinkels AWW1 durch Einstellen des Einleitsystems 1a.

Dadurch wird die Regelschleife der Abwurfwinkelregelung geschlossen und kann für die fortlaufende Überwachung des Streubilds SB1 erneut durchlaufen werden.

Die Drehzahl DZ1 wird hierbei beispielsweise dadurch eingestellt, dass dem Bediener ein geeigneter Wert als Vorschlag angezeigt wird, den er an einer Bedienstation in einem Schritt 19 bestätigt oder korrigiert. Es wäre auch denkbar, dem Bediener einen Wechsel der Streuscheiben 1, 2 vorzuschlagen, insbesondere falls sich der Sollwertbereich SWB durch Anpassen der Stellung PE1 des Einleitsystems 1a und der Drehzahl DZ1 nicht einhalten lässt.

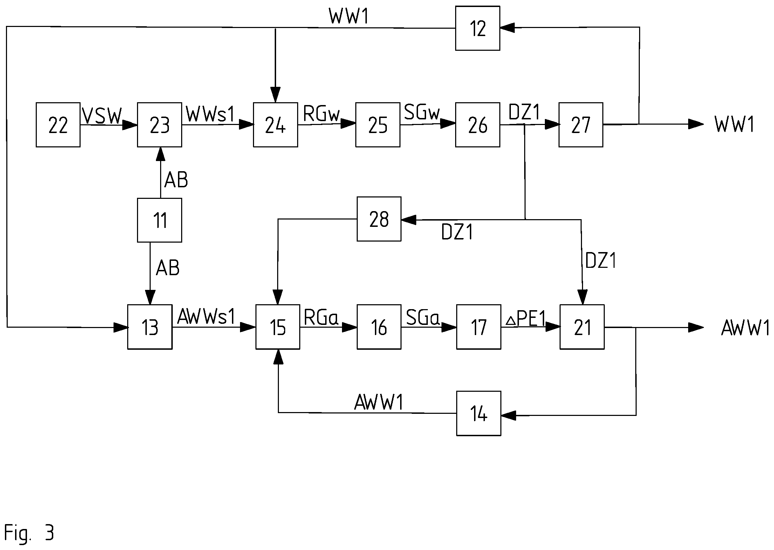

Wie die Fig. 3 erkennen lässt, basiert die Abwurfwinkelregelung auch bei einem hydraulischen Antrieb der Streuscheiben 1, 2 auf einer bedienerseitigen Vorgabe der Arbeitsbreite AB in einem Schritt 11 sowie auf einer fortlaufenden Messung des Istwerts der Wurfweite WW1 in einem Schritt 12. Wie bereits für den mechanischen Antrieb und die Abwurfwinkelregelung gemäß Fig. 2 beschrieben wurde, erfolgt die Verarbeitung dieser Parameter in entsprechenden Schritten 13, 15 und auf der Grundlage einer fortlaufenden Messung des Ist-Abwurfwinkels AWW1 im Schritt 14.

In entsprechender Weise wird das Berechnungsergebnis aus dem Schritt 15 als Regelgröße RGa an einen Regler zur Abwurfwinkelregelung weitergeleitet, so dass dieser in einem Schritt 16 unter Berücksichtigung des Regelstreckenverhaltens 17 des Einleitsystems 1a eine Stellgröße SGa der Abwurfwinkelregelung berechnet.

Daraus wird in einem Schritt 21 ein neuer Abwurfwinkel AWW1 unter Berücksichtigung des Regelstreckenverhaltens 17 des Einleitsystems 1a berechnet und eingestellt.

Auch bei hydraulischer Antriebskopplung 8 können beide Streuscheiben 1, 2 parallel auf der Grundlage von Messdaten / Berechnungsergebnissen für die erste Streuscheibe 1 und/oder anhand zusätzlich für die zweite Streuscheibe 2 gemessener / berechneter Parameter geregelt werden.

Der Schritt 21 unterscheidet sich vom Schritt 18 gemäß Fig. 2 dadurch, dass der Istwert des Abwurfwinkels AWW1 nicht innerhalb des Sollwertbereichs SWB eingestellt wird sondern an einen bedienerseitig vorgegebenen Sollwert VSW angepasst wird. Zu diesem Zweck wird die Drehzahl DZ1 der Streuscheibe 1 zusätzlich im Rahmen einer Wurfweiteregelung verändert und geht unter Berücksichtigung des Regelstreckenverhaltens 25 des hydraulischen Antriebs in den Schritt 21 ein. Dadurch kann der Abwurfwinkel AWW1 an einen diskreten Sollwert VSW angeglichen werden.

Der Sollwert VSW wird in einem Schritt 22 vom Bediener fest vorgegeben und mit der im Schritt 11 vorgegebenen Arbeitsbreite AB in einem Schritt 23 zur Berechnung einer Soll-Wurfweite WWs1 für die Wurfweiteregelung verwendet.

Entsprechend dem Schritt 15 der Abwurfwinkelregelung wird in einem Schritt 24 eine Regelgröße RGw für die Wurfweiteregelung berechnet. Diese ist die Eingangsgröße für einen Regler, der in einem Schritt 25 unter Berücksichtigung des Regelstreckenverhaltens 26 des hydraulischen Antriebs, beispielsweise eines Hydromotors und der Antriebskopplung 8, eine Stellgröße SGw der Wurfweiteregelung zum Einstellen der Drehzahl DZ1 der Streuscheibe 1 berechnet.

Unter Berücksichtigung des Regelstreckenverhaltens für die Änderung der Wurfweite WW1 in Abhängigkeit von der Drehzahl DZ1 wird letztere in einem Schritt 27 angepasst und der Istwert der Wurfweite WW1 an den zuvor berechneten Sollwert WWs1 angeglichen.

Die Ist-Wurfweite WW1 wird wiederum im Schritt 12 fortlaufend gemessen und die Regelschleife der Wurfweiteregelung dadurch geschlossen.

Wie die Fig. 3 ferner erkennen lässt, wird die Stellgröße SGw der Wurfweiteregelung unter Berücksichtigung des Regelstreckenverhaltens 25 auch dem Schritt 21 zugeführt, um unter Berücksichtigung des Regelstreckenverhaltens 25 des hydraulischen Antriebs einen neuen Ist-Abwurfwinkel AWW1 einzustellen.

Die Fig. 3 deutet ferner einen optionalen Schritt 28 an, in dem das Regelstreckenverhalten 26 des hydraulischen Motors und der Antriebskopplung 8 als Störgröße für die Abwurfwinkelregelung aufgefasst wird und in den Berechnungsschritt 15 und damit in die dabei berechnete Regelgröße RGa der Abwurfwinkelregelung einfließt.

Obwohl die kombinierte Abwurfwinkelregelung und Wurfweiteregelung gemäß Fig. 3 im Wesentlichen ohne Bedieneingriff auskommt, wäre es dennoch möglich, unter bestimmten Umständen Warnmeldungen an einen Bediener auszugeben, um beispielsweise die Streuscheiben 1, 2 durch einen besser geeigneten Typ auszutauschen. Je nach den vorliegenden Arbeitsbedingungen und den Eigenschaften der Düngersorte DS kann es vorkommen, dass mit den montierten Streuscheiben weder der vorgegebene Sollwert VSW noch der Sollwertbereich SWB für den Abwurfwinkel eingehalten werden kann.

Beim hydraulischen Antrieb der Streuscheiben 1, 2 wäre auch eine abgestufte Regelung denkbar, bei der zuerst versucht wird, einen vorgegebenen Sollwert VSW von beispielsweise 19° einzuhalten und, falls dies nicht möglich ist, danach den Abwurfwinkel AWW1 innerhalb des Sollwertbereichs SWB zu halten, also beispielsweise innerhalb von 15 bis 24°. Sollte eine der beiden obigen Bedingungen mit der vorliegenden Kombination aus Streuscheiben 1, 2 und Düngersorte DS nicht erfüllbar sein, könnte dem Bediener eine Warnmeldung angezeigt werden, um einen Wechsel der Streuscheiben 1, 2 zu veranlassen.

Ferner wäre es denkbar, dass die gewählte Düngersorte DS beziehungsweise eine für den Austrag vorliegende Charge der Düngersorte so ungünstige Eigenschaften aufweist, dass ein ordnungsgemäßer Düngeraustrag auch mit anderen Streuscheiben 1, 2 nicht möglich ist. Auch in diesem Fall wäre die Ausgabe einer entsprechenden Warnmeldung an den Bediener vorteilhaft.

Ebenso könnte dem Bediener angezeigt werden, dass mit einer bestimmten Düngersorte DS und den gegebenen technischen Voraussetzungen nur eine bestimmte Arbeitsbreite AB möglich ist, die von der bedienerseitig vorgegebenen Arbeitsbereite abweicht.

## Patentansprüche

1. Verfahren zur Abwurfwinkelregelung eines Schleuderstreuers (100), wobei:
a) ein Soll-Abwurfwinkel (AWWs1) aus einer vorgegebenen Arbeitsbreite (AB) und einer beim Austrag von Dünger an einer Streuscheibe (1) des Schleuderstreuers gemessenen Ist-Wurfweite (WW1) berechnet wird;
b) ein Ist-Abwurfwinkel (AWW1) beim Austrag des Düngers gemessen und eine Regelgröße (RGa) der Abwurfwinkelregelung aus dem Soll-Abwurfwinkel (AWWs1) und dem Ist-Abwurfwinkel (AWW1) berechnet wird; und wobei
c) eine Stellgröße (SGa) der Abwurfwinkelregelung auf die Stellung (PE), insbesondere eine Winkelposition eines an der Streuscheibe (1) ausgebildeten Einleitsystems (1a) für den Dünger einwirkt.

2. Verfahren nach Anspruch 1, wobei die Regelgröße (RGa) der Abwurfwinkelregelung einschließlich einer Differenzbildung aus dem Soll-Abwurfwinkel (AWWs1) und dem Ist-Abwurfwinkel (AWW1) berechnet wird.

3. Verfahren nach Anspruch 1 oder 2, wobei der Ist-Abwurfwinkel (AWW1) mittels Radarstrahlen vom Schleuderstreuer (100) aus und insbesondere fortlaufend gemessen wird.

4. Verfahren nach Anspruch 3, wobei der Ist-Abwurfwinkel (AWW1) ein charakteristischer, insbesondere mittlerer Abwurfwinkel einer mittels Radarstrahlen gemessenen Abwurfwinkelverteilung ist.

5. Verfahren nach wenigstens einem der vorigen Ansprüche, wobei ferner die Drehzahl (DZ1) der Streuscheibe (1) angepasst wird, um den Soll-Abwurfwinkel (AWWs1) innerhalb eines Sollwertbereichs (SWB) zu halten.

6. Verfahren nach wenigstens einem der Ansprüche 1 bis 4, wobei ferner die Drehzahl (DZ1) der Streuscheibe (1) angepasst wird, um ein vorgegebenes Verhältnis aus einer zuvor festgelegten Arbeitsbreite (AB) und der Ist-Wurfweite (WW1) einzuhalten und/oder dieses Verhältnis in einem zuvor festgelegten Sollwertbereich zu halten.

7. Verfahren nach Anspruch 5 oder 6, wobei die Streuscheibe (1) mechanisch angetrieben wird.

8. Verfahren nach einem der Ansprüche 1 bis 4, das ferner zur Wurfweiteregelung des Schleuderstreuers (100) ausgebildet ist, wobei ferner:
d) eine Soll-Wurfweite (WWs1) aus der Arbeitsbreite (AB) und einem vorgegebenen Sollwert (VSW) des Abwurfwinkels berechnet wird oder eine Sollwurfweite (WWs1) aus der Arbeitsbreite (AB) und einem vorgegebenen Verhältnis von Sollwurfweite und Arbeitsbreite (AB) berechnet wird;
e) eine Ist-Wurfweite (WW1) beim Austrag des Düngers gemessen und eine Regelgröße (RGw) der Wurfweiteregelung aus der Soll-Wurfweite (WWs1) und der Ist-Wurfweite (WW1) berechnet wird; und
f) eine Stellgröße (SGw) der Wurfweiteregelung auf die Drehzahl (DZ1) der Streuscheibe (1) einwirkt.

9. Verfahren nach Anspruch 8, wobei die Regelgröße (RGw) der Wurfweiteregelung einschließlich einer Differenzbildung aus der Soll-Wurfweite (WWs1) und der Ist-Wurfweite (WW1) berechnet wird.

10. Verfahren nach Anspruch 8 oder 9, wobei die Ist-Wurfweite (WW1) mittels Radarstrahlen vom Schleuderstreuer (100) aus und insbesondere fortlaufend gemessen wird.

11. Verfahren nach einem der Ansprüche 8 bis 10, wobei der vorgegebene Sollwert (VSW) für den Abwurfwinkel spezifisch für einen bestimmten Streuertyp und einen bestimmten Streuscheibentyp ist.

12. Verfahren nach wenigstens einem der Ansprüche 8 bis 11, wobei die Streuscheibe (1) hydraulisch angetrieben wird.

13. Verfahren nach wenigstens einem der Ansprüche 5 bis 12, wobei dem Bediener die einzustellende Drehzahl (DZ1) maschinell angezeigt wird und diese dann durch den Bediener manuell am Schlepper angepasst wird.

14. Verfahren nach wenigstens einem der Ansprüche 8 bis 13, wobei die Drehzahl (DZ1) der Streuscheibe (1) als Störgröße in die Berechnung der Regelgröße (RGa) der Abwurfwinkelregelung eingeht, insbesondere zur kompensatorischen Störgrößenaufschaltung in der Abwurfwinkelregelung.

15. Verfahren nach wenigstens einem der Ansprüche 5 und 8 bis 14, wobei die Drehzahl (DZ1) durch Übermittlung eines Steuersignals vom Schleuderstreuer (100) an einen damit gekoppelten und die Streuscheibe (1) antreibenden Schlepper (200) angepasst wird.

16. Verfahren nach wenigstens einem der vorigen Ansprüche, wobei eine Warnmeldung ausgegeben wird, falls der Ist-Abwurfwinkel (AWW1) und/oder der Soll-Abwurfwinkel (AWWs1) außerhalb eines/des Sollwertbereichs (SWB) liegt.

17. Schleuderstreuer (100) mit:
- wenigstens einer Streuscheibe (1, 2) und einem zugehörigen Einleitsystem (1a, 2a) für Dünger;
- einer insbesondere radargestützten ersten Überwachungseinrichtung (6) zum Messen eines Abwurfwinkels (AWW1) des von der Streuscheibe (1) ausgetragenen Düngers;
- einer insbesondere radargestützten zweiten Überwachungseinrichtung (7) zum Messen einer Wurfweite (WW1) des von der Streuscheibe (1) ausgetragenen Düngers; und
- einem Regelungssystem (3, 5) zur Abwurfwinkelregelung gemäß wenigstens einem der Ansprüche 1 bis 7 oder zur Abwurfwinkelregelung und Wurfweiteregelung gemäß wenigstens einem der Ansprüche 8 bis 16 angepasst.

## Claims

1. Method for controlling a discharge angle of a centrifugal spreader (100), wherein:
a) a setpoint discharge angle (AWWs1) is computed from a prescribed operating width (AB) and an actual projection range (WW1) measured at a spreading disc (1) of the centrifugal spreader during the delivery of fertilizer;
b) an actual discharge angle (AWW1) is measured during the delivery of the fertilizer and a controlled variable (RGa) for the control of the discharge angle is computed from the setpoint discharge angle (AWWs1) and the actual discharge angle (AWW1); and wherein
c) a manipulated variable (SGa) for the control of the discharge angle affects the position (PE), in particular an angular position of an injection system (1a) for the fertilizer that is formed on the spreading disc (1).

2. Method according to Claim 1, wherein the controlled variable (RGa) for the control of the discharge angle is computed from the setpoint discharge angle (AWWs1) and the actual discharge angle (AWW1) including formation of a difference.

3. Method according to Claim 1 or 2, wherein the actual discharge angle (AWW1) is measured by means of radar beams from the centrifugal spreader (100) and in particular continually.

4. Method according to Claim 3, wherein the actual discharge angle (AWW1) is a characteristic, in particular mean discharge angle of a discharge angle distribution measured by means of radar beams.

5. Method according to at least one of the preceding claims, wherein further the speed (DZ1) of the spreading disc (1) is adjusted in order to keep the setpoint discharge angle (AWWs1) within a setpoint value range (SWB).

6. Method according to at least one of Claims 1 to 4, wherein further the speed (DZ1) of the spreading disc (1) is adjusted in order to keep to a prescribed ratio of a previously stipulated operating width (AB) and the actual projection range (WW1) and/or to keep this ratio in a previously stipulated setpoint value range.

7. Method according to Claim 5 or 6, wherein the spreading disc (1) is driven mechanically.

8. Method according to one of Claims 1 to 4, further configured to control the projection range of the centrifugal spreader (100), wherein further:
d) a setpoint projection range (WWs1) is computed from the operating width (AB) and a prescribed setpoint value (VSW) of the discharge angle or a setpoint projection range (WWs1) is computed from the operating width (AB) and a prescribed ratio of setpoint projection range and operating width (AB);
e) an actual projection range (WW1) is measured during delivery of the fertilizer and a controlled variable (RGw) for the control of the projection range is computed from the setpoint projection range (WWs1) and the actual projection range (WW1); and
f) a manipulated variable (SGw) for the control of the projection range affects the speed (DZ1) of the spreading disc (1).

9. Method according to Claim 8, wherein the controlled variable (RGw) for the control of the projection range is computed from the setpoint projection range (WWs1) and the actual projection range (WW1) including formation of a difference.

10. Method according to Claim 8 or 9, wherein the actual projection range (WW1) is measured by means of radar beams from the centrifugal spreader (100) and in particular continually.

11. Method according to one of Claims 8 to 10, wherein the prescribed setpoint value (VSW) for the discharge angle is specific to a particular type of spreader and a particular type of spreading disc.

12. Method according to at least one of Claims 8 to 11, wherein the spreading disc (1) is driven hydraulically.

13. Method according to at least one of Claims 5 to 12, wherein the speed (DZ1) to be set is displayed to the operator automatically and said speed is then adjusted by the operator manually on the tractor.

14. Method according to at least one of Claims 8 to 13, wherein the speed (DZ1) of the spreading disc (1) is used as a disturbance variable in the computation of the controlled variable (RGa) for the control of the discharge angle, in particular for compensatory disturbance variable application in the control of the discharge angle.

15. Method according to at least one of Claims 5 and 8 to 14, wherein the speed (DZ1) is adjusted by transmitting a control signal from the centrifugal spreader (100) to a tractor (200) coupled thereto driving the spreading disc (1).

16. Method according to at least one of the preceding claims, wherein a warning is output if the actual discharge angle (AWW1) and/or the setpoint discharge angle (AWWs1) is outside a/the setpoint value range (SWB).

17. Centrifugal spreader (100) having:
- at least one spreading disc (1, 2) and an associated injection system (1a, 2a) for fertilizer;
- an, in particular radar-assisted, first monitoring device (6) for measuring a discharge angle (AWW1) of the fertilizer delivered by the spreading disc (1);
- an, in particular radar-assisted, second monitoring device (7) for measuring a projection range (WW1) of the fertilizer delivered by the spreading disc (1); and
- a control system (3, 5) adapted for controlling the discharge angle according to at least one of Claims 1 to 7 or for controlling the discharge angle and controlling the projection range according to at least one of Claims 8 to 16.

## Revendications

1. Procédé de régulation d'angle de déversement d'un épandeur (100), dans lequel:
a) on calcule un angle de déversement de consigne (AWWs1) à partir d'une largeur de travail prédéterminée (AB) et d'une portée de déversement réelle (WW1) mesurée lors de l'expulsion d'engrais à un disque d'épandage (1) de l'épandeur;
b) on mesure un angle de déversement réel (AWW1) lors de l'expulsion de l'engrais et on calcule une grandeur de régulation (RGa) de la régulation de l'angle de déversement à partir de l'angle de déversement de consigne (AWWs1) et de l'angle de déversement réel (AWW1); et dans lequel
c) une grandeur de réglage (SGa) de la régulation de l'angle de déversement agit sur la position (PE), en particulier une position angulaire d'un système d'introduction pour l'engrais (1a) formé sur le disque d'épandage (1).

2. Procédé selon la revendication 1, dans lequel on calcule la grandeur de régulation (RGa) de la régulation de l'angle de déversement y compris une formation de différence à partir de l'angle de déversement de consigne (AWWs1) et de l'angle de déversement réel (AWW1).

3. Procédé selon la revendication 1 ou 2, dans lequel on mesure et en particulier en continu l'angle de déversement réel (AWW1) au moyen de rayons radar depuis l'épandeur (100).

4. Procédé selon la revendication 3, dans lequel l'angle de déversement réel (AWW1) est un angle de déversement caractéristique, en particulier moyen, d'une distribution d'angle de déversement mesurée au moyen de rayons radar.

5. Procédé selon au moins une des revendications précédentes, dans lequel on adapte en outre le nombre de tours (DZ1) du disque d'épandage (1), afin de maintenir l'angle de déversement de consigne (AWWs1) à l'intérieur d'une plage de valeurs de consigne (SWB).

6. Procédé selon au moins une des revendications 1 à 4, dans lequel on adapte en outre le nombre de tours (DZ1) du disque d'épandage (1), afin de respecter un rapport prédéterminé entre une largeur de travail (AB) fixée au préalable et la portée de déversement réelle (WW1) et/ou pour maintenir ce rapport dans une plage de valeurs de consigne fixée au préalable.

7. Procédé selon la revendication 5 ou 6, dans lequel on entraîne le disque d'épandage (1) mécaniquement.

8. Procédé selon l'une quelconque des revendications 1 à 4, qui est en outre conçu pour la régulation de la portée de déversement de l'épandeur (100), dans lequel en outre:
d) on calcule une portée de déversement de consigne (WWs1) à partir de la largeur de travail (AB) et d'une valeur de consigne prédéterminée (VSW) de l'angle de déversement ou on calcule une portée de déversement de consigne (WWs1) à partir de la largeur de travail (AB) et d'un rapport prédéterminé entre la portée de déversement de consigne et la largeur de travail (AB);
e) on mesure une portée de déversement réelle (WW1) lors de l'expulsion de l'engrais et on calcule une grandeur de régulation (RGw) de la régulation de la portée de déversement à partir de la portée de déversement de consigne (WWs1) et de la portée de déversement réelle (WW1); et
f) une grandeur de réglage (SGw) de la régulation de la portée de déversement agit sur le nombre de tours (DZ1) du disque d'épandage (1).

9. Procédé selon la revendication 8, dans lequel on calcule la grandeur de régulation (RGw) de la régulation de la portée de déversement y compris une formation de différence à partir de la portée de déversement de consigne (WWs1) et de la portée de déversement réelle (WW1).

10. Procédé selon la revendication 8 ou 9, dans lequel on mesure et en particulier en continu la portée de déversement réelle (WW1) au moyen de rayons radar depuis l'épandeur (100).

11. Procédé selon l'une quelconque des revendications 8 à 10, dans lequel la valeur de consigne prédéterminée (VSW) pour l'angle de déversement est spécifique pour un type d'épandeur déterminé et un type de disque d'épandage déterminé.

12. Procédé selon au moins une des revendications 8 à 11, dans lequel on entraîne le disque d'épandage (1) hydrauliquement.

13. Procédé selon au moins une des revendications 5 à 12, dans lequel on affiche automatiquement pour l'opérateur le nombre de tours à régler (DZ1) et l'opérateur adapte ensuite celui-ci manuellement sur le tracteur.

14. Procédé selon au moins une des revendications 8 à 13, dans lequel le nombre de tours (DZ1) du disque d'épandage (1) intervient comme grandeur perturbatrice dans le calcul de la grandeur de régulation (RGa) de la régulation de l'angle de déversement, en particulier pour l'intégration compensatoire de la grandeur perturbatrice dans la régulation de l'angle de déversement.

15. Procédé selon au moins une des revendications 5 et 8 à 14, dans lequel on adapte le nombre de tours (DZ1) par transmission d'un signal de commande de l'épandeur (100) à un tracteur (200) attelé à celui-ci et entraînant le disque d'épandage (1).

16. Procédé selon au moins une des revendications précédentes, dans lequel on émet un message d'avertissement, dans le cas où l'angle de déversement réel (AWW1) et/ou l'angle de déversement de consigne (AWWs1) se situe hors d'une/de la plage de valeurs de consigne (SWB).

17. Epandeur (100) avec:
- au moins un disque d'épandage (1, 2) et un système d'introduction correspondant (1a, 2a) pour de l'engrais;
- un premier dispositif de surveillance (6), en particulier avec assistance radar, pour mesurer un angle de déversement (AWW1) de l'engrais expulsé par le disque d'épandage (1);
- un second dispositif de surveillance (7), en particulier avec assistance radar, pour mesurer une portée de déversement (WW1) de l'engrais expulsé par le disque d'épandage (1); et
- un système de régulation (3, 5) adapté pour la régulation de l'angle de déversement selon au moins une des revendications 1 à 7 ou pour la régulation de l'angle de déversement et la régulation de la portée de déversement selon au moins une des revendications 8 à 16.
